# EUROPÄISCHE PATENTSCHRIFT

(11) **EP 4 421 319 B1**
(45) Veröffentlichungstag und Bekanntmachung des Hinweises auf die Patenterteilung: **10.12.2025**
(21) Anmeldenummer: 24152534.4
(22) Anmeldetag: 18.01.2024
(51) Int. Cl.: F04B 49/00, F04B 49/08, A01B 63/10, F15B 11/042, F15B 21/08, F04B 49/06, F04B 1/295, F04B 1/324

(54) **LASTGESTEUERTE HYDRAULIKVERSORGUNG FÜR EIN NUTZFAHRZEUG**
LOAD-CONTROLLED HYDRAULIC SUPPLY FOR A UTILITY VEHICLE
ALIMENTATION HYDRAULIQUE À COMMANDE DE CHARGE POUR VÉHICULE UTILITAIRE

(30) Priorität: 22.02.2023 DE 102023104289
(43) Veröffentlichungstag der Anmeldung: 28.08.2024
(73) Patentinhaber: Deere & Company, Moline, IL 61265 (US)
(72) Erfinder: BILLICH, MANUEL, 68163 Mannheim (DE)
(74) Vertreter: Dehnhardt, Florian Christopher

(56) Entgegenhaltungen:
- WO-A1-2016/071411
- DE-A1- 102019 219 451
- US-A- 5 630 317

## Beschreibung

Die Erfindung betrifft eine lastgesteuerte Hydraulikversorgung für ein Nutzfahrzeug, insbesondere einen landwirtschaftlichen Traktor, umfassend eine aus einem Hydraulikreservoir mit Hydraulikflüssigkeit gespeiste Verstellpumpe, wobei die Verstellpumpe einen mechanisch betätigbaren Steuerschieber zur Veränderung eines geförderten Volumenstroms aufweist.

Im land- und forstwirtschaftlichen Nutzfahrzeugbereich ist der Einsatz hydraulisch betriebener Fahrzeugaggregate weit verbreitet. Insbesondere bei landwirtschaftlichen Traktoren besteht zudem die Möglichkeit, weitere hydraulische Verbraucher zur Durchführung landwirtschaftlicher Arbeitsfunktionen über eine hydraulische Schnittstelle extern anzuschließen. Hierbei ist in der Regel eine als sogenanntes Load-Sensing-System ausgebildete lastgesteuerte Hydraulikversorgung vorgesehen. Die lastgesteuerte Hydraulikversorgung umfasst typischerweise eine aus einem Hydraulikreservoir mit Hydraulikflüssigkeit gespeiste Verstellpumpe mit einem Lastmeldeanschluss, über den sich ein eine Lastanforderung eines jeweiligen hydraulischen Verbrauchers repräsentierender Lastmeldedruck zur mechanischen Betätigung eines federbelasteten Steuerschiebers einsteuern lässt. Dabei ist die Förderleistung bzw. der von der Verstellpumpe geförderte Volumenstrom umso höher, je höher der am Lastmeldeanschluss anliegende Lastmeldedruck ist.

Der Antrieb der Verstellpumpe erfolgt in land- und forstwirtschaftlichen Nutzfahrzeugen meist mittels eines als Dieselmotor ausgebildeten Antriebsmotors, der zugleich Bestandteil eines Fahrantriebs des Nutzfahrzeugs ist. Zur Optimierung der Verbrauchseffizienz sowie des Geräuschverhaltens ist ein Betrieb des Dieselmotors vorwiegend in einem mittleren Drehzahlbereich erwünscht. Die Verstellpumpe wird daher derart dimensioniert, dass deren Förderkapazität bei einem Betrieb des Dieselmotors im mittleren Drehzahlbereich hinreichend ist, um einer verlässlichen Versorgung sämtlicher hydraulischer Verbraucher auch unter erhöhten Lastbedingungen gerecht zu werden. Dies kann jedoch dazu führen, dass außerhalb dieses Drehzahlbereichs der von der Verstellpumpe geförderte Volumenstrom unnötig hoch ist und/oder der Dieselmotor in einem vergleichsweise ineffizienten Leistungskennlinienbereich arbeitet.

Eine lastgesteuerte Hydraulikversorgung für einen landwirtschaftlichen Traktor ist zum Beispiel aus dem Dokument WO 2016/071411 A1 vorbekannt.

Angesichts dessen ist es Aufgabe der vorliegenden Erfindung, eine lastgesteuerte Hydraulikversorgung der eingangs genannten Art dahingehend weiterzubilden, dass diese einen Betrieb der Verstellpumpe mit verbesserter Effizienz ermöglicht.

Diese Aufgabe wird durch eine lastgesteuerte Hydraulikversorgung für ein Nutzfahrzeug mit den Merkmalen des Patentanspruchs 1 gelöst.

Die lastgesteuerte Hydraulikversorgung für ein Nutzfahrzeug, insbesondere einen landwirtschaftlichen Traktor, umfasst eine aus einem Hydraulikreservoir mit Hydraulikflüssigkeit gespeiste Verstellpumpe, wobei die Verstellpumpe einen mechanisch betätigbaren Steuerschieber zur Veränderung eines geförderten Volumenstroms aufweist. Des Weiteren weist die Verstellpumpe ein elektrisches Stellmittel zur Betätigung des Steuerschiebers auf, wobei eine Kontrolleinheit das elektrische Stellmittel nach Maßgabe einer ermittelten verbraucherseitigen Lastanforderung ansteuert. Die Ermittlung der verbraucherseitigen Lastanforderung erfolgt mittels eines Drucksensors, der der Erfassung eines an einer Rückmeldeleitung anliegenden Lastmeldedrucks eines hydraulischen Verbrauchers dient, wobei das von dem Drucksensor erzeugte Sensorsignal von der Kontrolleinheit in ein zur Betätigung des elektrischen Stellmittels geeignetes Steuersignal derart umgesetzt wird, dass von der Verstellpumpe ein umso höherer Volumenstrom gefördert wird, je höher der an der Rückmeldeleitung anliegende Lastmeldedruck ist.

Im Gegensatz zu einer direkten mechanischen Betätigung des Steuerschiebers mittels des Lastmeldedrucks macht es das elektrische Stellmittel in Verbindung mit der Kontrolleinheit mit verhältnismäßig geringem technischen Aufwand möglich, neben einer durch den Lastmeldedruck repräsentierten verbraucherseitigen Lastanforderung weitere für einen effizienten Betrieb der Verstellpumpe maßgebliche Faktoren zu berücksichtigen.

Bei dem elektrischen Stellmittel kann es sich insbesondere um einen elektromagnetischen Aktuator handeln, der zur Ansteuerung mit einem Leistungsausgang der Kontrolleinheit in Verbindung steht, sodass sich der Steuerschieber entgegen einer rückstellenden Federkraft unter entsprechender Erhöhung des geförderten Volumenstroms auslenken lässt. Der Umfang der Auslenkung kann beispielsweise mittels eines Stellwegsensors erfasst und an die Kontrolleinheit zur Verwirklichung eines Regelkreises rückgemeldet werden.

Die Verstellpumpe wird üblicherweise von einem als Dieselmotor ausgebildeten Antriebsmotor, der zugleich Bestandteil eines Fahrantriebs des Nutzfahrzeugs ist, über einen Riementrieb und/oder ein Zwischengetriebe in Drehung versetzt, sodass Motordrehzahl und Pumpendrehzahl einem festen Übersetzungsverhältnis gehorchend zueinander in Beziehung stehen. Vorteilhafte Weiterbildungen der erfindungsgemäßen Hydraulikanordnung gehen aus den Unteransprüchen hervor.

Erfindungsgemäß erfolgt die Ermittlung der verbraucherseitigen Lastanforderung mittels eines Drucksensors, der der Erfassung eines an einer Rückmeldeleitung anliegenden Lastmeldedrucks eines hydraulischen Verbrauchers dient. Hierbei wird das von dem Drucksensor erzeugte Sensorsignal von der Kontrolleinheit in ein zur Betätigung des elektrischen Stellmittels geeignetes Steuersignal derart umgesetzt, dass von der Verstellpumpe ein umso höherer Volumenstrom gefördert wird, je höher der an der Rückmeldeleitung anliegende Lastmeldedruck ist.

Weiterhin kann die Kontrolleinheit das elektrische Stellmittel hinsichtlich einer gezielten Modifikation eines zwischen gefördertem Volumenstrom und antriebsseitiger Pumpendrehzahl bestehenden funktionalen Zusammenhangs ansteuern. So stellt die Modifikation der für die betreffende Verstellpumpe spezifischen "Betriebskennlinie" eine besonders verlässliche Möglichkeit dar, neben der durch den Lastmeldedruck repräsentierten verbraucherseitigen Lastanforderung weitere für einen effizienten Betrieb der Verstellpumpe maßgebliche Faktoren zu berücksichtigen.

Insoweit ist es zunächst denkbar, dass die Modifikation seitens der Kontrolleinheit derart erfolgt, dass der von der Verstellpumpe geförderte Volumenstrom mit Erreichen eines vorgegebenen Höchstwerts der Pumpendrehzahl einen konstanten Wert einnimmt, also auch bei weiterer Zunahme der Pumpendrehzahl über den vorgegebenen Höchstwert hinaus zumindest im Wesentlichen unverändert bleibt. Dies stellt letztlich eine Begrenzung der seitens des Antriebsmotors aufzubringenden Antriebsleistung durch Kappung der Förderkapazität der Verstellpumpe dar, wodurch sich verhindern lässt, dass der Antriebsmotor in einem vergleichsweise ineffizienten Leistungskennlinienbereich betrieben wird, was insbesondere für einen Dieselmotor in besonderem Maße zutrifft. Ähnliche Betrachtungen gelten für die Dimensionierung eines gegebenenfalls verwendeten Zwischengetriebes, denn dieses kann für die Übertragung dementsprechend geringerer Antriebsmomente und damit baulich kompakter ausgelegt werden.

Des Weiteren kann vorgesehen sein, dass die Modifikation seitens der Kontrolleinheit derart erfolgt, dass der von der Verstellpumpe geförderte Volumenstrom im Sinne der Einhaltung einer vorgegebenen Leistungscharakteristik des zum Betrieb der Verstellpumpe vorgesehenen Antriebsmotors angepasst wird. Für den Fall eines als Dieselmotor ausgebildeten Antriebsmotors kann der geförderte Volumenstrom insbesondere im Leerlaufdrehzahlbereich bzw. einem Bereich mit vergleichsweise niedriger Drehzahl soweit abgesenkt werden, dass ein mögliches Abwürgen des Dieselmotors aufgrund einer übermäßigen Belastung von Seiten der Verstellpumpe unterbunden wird.

Die erfindungsgemäße lastgesteuerte Hydraulikversorgung für ein Nutzfahrzeug wird im Folgenden anhand der Zeichnungen näher beschrieben. Es zeigen:
- Fig. 1: ein schematisch dargestelltes Ausführungsbeispiel der erfindungsgemäßen lastgesteuerten Hydraulikversorgung, und
- Fig. 2: einen beispielhaften Verlauf eines zwischen gefördertem Volumenstrom und antriebsseitiger Pumpendrehzahl bestehenden funktionalen Zusammenhangs.

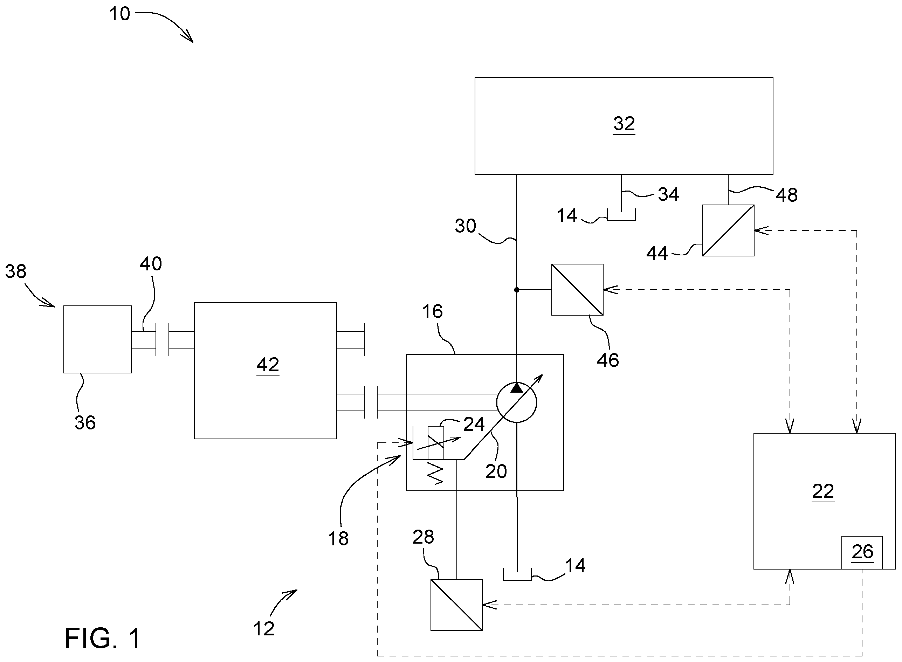

Fig. 1 zeigt ein schematisch dargestelltes Ausführungsbeispiel der erfindungsgemäßen lastgesteuerten Hydraulikversorgung für ein Nutzfahrzeug.

Bei dem nicht dargestellten Nutzfahrzeug handelt es sich vorliegend um einen landwirtschaftlichen Traktor 10, wobei dieser mit einer als sogenanntes Load-Sensing-System ausgebildeten lastgesteuerten Hydraulikversorgung 12 ausgestattet ist. Die lastgesteuerte Hydraulikversorgung 12 umfasst eine aus einem Hydraulikreservoir 14 mit Hydraulikflüssigkeit gespeiste Verstellpumpe 16, die einen mittels eines elektrischen Stellmittels 18 betätigbaren Steuerschieber 20 aufweist, wobei eine Kontrolleinheit 22 das elektrische Stellmittel 18 nach Maßgabe einer ermittelten verbraucherseitigen Lastanforderung ansteuert.

Bei dem elektrischen Stellmittel 18 handelt es sich um einen elektromagnetischen Aktuator 24, der zur Ansteuerung mit einem Leistungsausgang 26 der Kontrolleinheit 22 in Verbindung steht, sodass sich der Steuerschieber 20 entgegen einer rückstellenden Federkraft unter entsprechender Erhöhung des von der Verstellpumpe 16 geförderten Volumenstroms Qₚᵤₘₚ auslenken lässt. Der Umfang der Auslenkung wird mittels eines Stellwegsensors 28 erfasst und an die Kontrolleinheit 22 zur Verwirklichung eines Regelkreises rückgemeldet.

Weitere typische Bestandteile der Hydraulikversorgung 12, wie beispielsweise Ventilbaugruppen zur Steuerung hydraulischer Verbraucher, sind der Übersichtlichkeit halber nicht dargestellt und spielen für das Verständnis der Funktion der Hydraulikversorgung 12 keine Rolle. Auch ist in Fig. 1 stellvertretend lediglich ein über eine zugehörige Versorgungsleitung 30 betriebener einzelner hydraulischer Verbraucher 32 gezeigt, bei dem es sich um ein hydraulisch betriebenes Fahrzeugaggregat oder dergleichen handelt. Hierbei verlässt die Hydraulikflüssigkeit nach erfolgter hydraulischer Leistungsumsetzung den hydraulischen Verbraucher 32 über eine Rücklaufleitung 34 in Richtung des Hydraulikreservoirs 14. Daneben können auch weitere hydraulische Verbraucher vorhanden sein, unter anderem auch solche, die zur Durchführung landwirtschaftlicher Arbeitsfunktionen über eine hydraulische Schnittstelle des landwirtschaftlichen Traktors 10 extern anschließbar sind.

Beispielsgemäß wird die Verstellpumpe 16 von einem als Dieselmotor 36 ausgebildeten Antriebsmotor 38, der zugleich Bestandteil eines Fahrantriebs des landwirtschaftlichen Traktors 10 ist, über einen Riementrieb 40 und/oder ein Zwischengetriebe 42 in Drehung versetzt, sodass Motordrehzahl n_{eng} und Pumpendrehzahl nₚᵤₘₚ einem festen Übersetzungsverhältnis gehorchend zueinander in Beziehung stehen.

Die Ermittlung der verbraucherseitigen Lastanforderung erfolgt mittels eines Drucksensors 44, der der Erfassung eines an einer Rückmeldeleitung 46 anliegenden Lastmeldedrucks p_{feedbk} des hydraulischen Verbrauchers 32 dient. Hierbei wird das von dem Drucksensor 44 erzeugte Sensorsignal von der Kontrolleinheit 22 in ein zur Betätigung des elektrischen Stellmittels 18 vorgesehenes Steuersignal derart umgesetzt, dass von der Verstellpumpe 16 ein umso höherer Volumenstrom Qₚᵤₘₚ gefördert wird, je höher der an der Rückmeldeleitung 46 anliegende Lastmeldedruck p_{feedbk} ist.

Ein mit der Versorgungsleitung 30 kommunizierender weiterer Drucksensor 48 dient der Erfassung des von der Verstellpumpe 16 erzeugten Betriebsdrucks pₚᵤₘₚ, wobei die Kontrolleinheit 22 den von der Verstellpumpe 16 erzeugten Fördervolumenstrom Qₚᵤₘₚ durch entsprechende Ansteuerung des elektrischen Stellmittels 18 drosselt, wenn diese durch Auswertung der von dem weiteren Drucksensor 48 bereitgestellten Sensorsignale erkennt, dass der Betriebsdruck pₚᵤₘₚ einen zulässigen Höchstwert überschreitet.

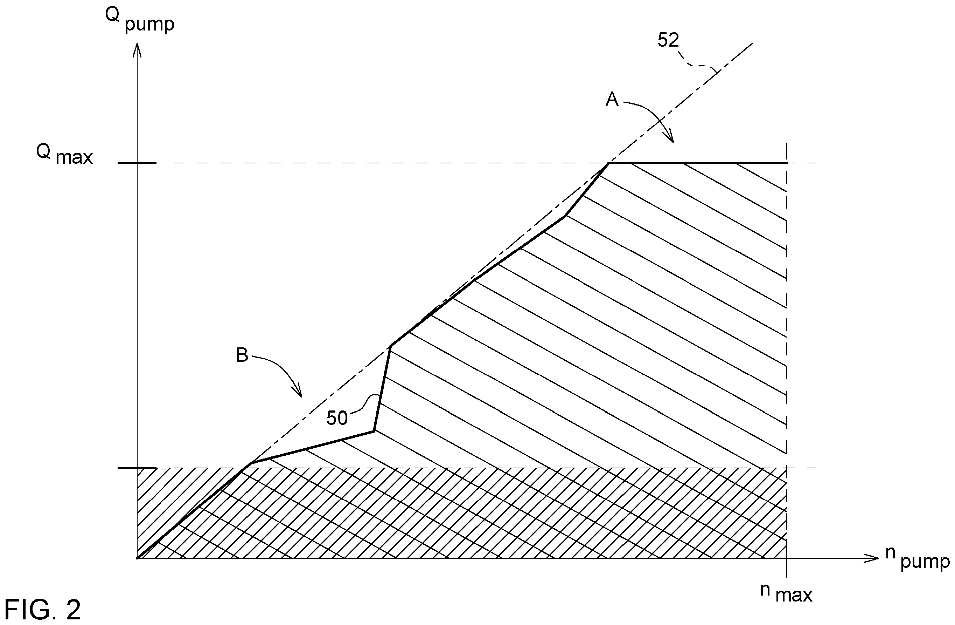

In Fig. 2 ist ein typischer Verlauf eines zwischen gefördertem Volumenstrom Qₚᵤₘₚ und antriebsseitiger Pumpendrehzahl nₚᵤₘₚ bestehenden funktionalen Zusammenhangs 50 wiedergegeben. Die Strichpunktlinie 52 zeigt zu Vergleichszwecken den auf die Abhängigkeit des geförderten Volumenstroms Qₚᵤₘₚ von der Pumpendrehzahl nₚᵤₘₚ reduzierten Verlauf. Dieser entspricht dem Steuerverhalten einer konventionellen Verstellpumpe, bei der eine direkte (rein) mechanische Betätigung des Steuerschiebers mittels des Lastmeldedrucks erfolgt.

Abweichend davon ist nunmehr vorgesehen, dass die Kontrolleinheit 22 das elektrische Stellmittel 18 hinsichtlich einer gezielten Modifikation des zwischen gefördertem Volumenstrom Qₚᵤₘₚ und antriebsseitiger Pumpendrehzahl nₚᵤₘₚ bestehenden funktionalen Zusammenhangs 50 ansteuert. Die Modifikation kann dabei unterschiedlichen Betriebssituationen Rechnung tragen.

So erfolgt in einem **ersten Abschnitt A** die Modifikation seitens der Kontrolleinheit 22 derart, dass der von der Verstellpumpe 16 geförderte Volumenstrom Qₚᵤₘₚ mit Erreichen eines vorgegebenen Höchstwerts nₘₐₓ der Pumpendrehzahl nₚᵤₘₚ einen konstanten Wert Qₘₐₓ einnimmt. Hierbei bleibt der geförderte Volumenstrom Qₚᵤₘₚ auch bei weiterer Zunahme der Pumpendrehzahl nₚᵤₘₚ über den vorgegebenen Höchstwert nₘₐₓ hinaus zumindest im Wesentlichen unverändert. Dies stellt letztlich eine Begrenzung der seitens des Dieselmotors 36 aufzubringenden Antriebsleistung durch Kappung der Förderkapazität der Verstellpumpe 16 dar, wodurch sich verhindern lässt, dass der Dieselmotor 36 in einem vergleichsweise ineffizienten Leistungskennlinienbereich betrieben wird. Ähnliche Betrachtungen gelten für die Dimensionierung des Zwischengetriebes 42, denn dieses kann für die Übertragung dementsprechend geringerer Antriebsmomente und damit baulich kompakter ausgelegt werden.

Des Weiteren erfolgt in einem **zweiten Abschnitt B** die Modifikation seitens der Kontrolleinheit 22 derart, dass der von der Verstellpumpe 16 geförderte Volumenstrom Qₚᵤₘₚ im Sinne der Einhaltung einer vorgegebenen Leistungscharakteristik des Dieselmotors 36 angepasst wird. Hierbei wird der geförderte Volumenstrom Qₚᵤₘₚ in einem Leerlaufdrehzahlbereich bzw. einem Bereich mit vergleichsweise niedriger Drehzahl des Dieselmotors 36 soweit abgesenkt, dass ein mögliches Abwürgen des Dieselmotors 36 aufgrund einer übermäßigen Belastung von Seiten der Verstellpumpe 16 unterbunden wird.

## Patentansprüche

1. Lastgesteuerte Hydraulikversorgung für ein Nutzfahrzeug, insbesondere einen landwirtschaftlichen Traktor, umfassend eine aus einem Hydraulikreservoir (14) mit Hydraulikflüssigkeit gespeiste Verstellpumpe (16), wobei die Verstellpumpe (16) einen mechanisch betätigbaren Steuerschieber (20) zur Veränderung eines geförderten Volumenstroms (Qₚᵤₘₚ) sowie ein elektrisches Stellmittel (18) zur Betätigung des Steuerschiebers (20) aufweist, wobei eine Kontrolleinheit (22) das elektrische Stellmittel (18) nach Maßgabe einer ermittelten verbraucherseitigen Lastanforderung ansteuert, **dadurch gekennzeichnet, dass** die Ermittlung der verbraucherseitigen Lastanforderung mittels eines Drucksensors (44) erfolgt, der der Erfassung eines an einer Rückmeldeleitung (46) anliegenden Lastmeldedrucks (p_{feedbk}) eines hydraulischen Verbrauchers (32) dient, wobei das von dem Drucksensor (44) erzeugte Sensorsignal von der Kontrolleinheit (22) in ein zur Betätigung des elektrischen Stellmittels (18) geeignetes Steuersignal derart umgesetzt wird, dass von der Verstellpumpe (16) ein umso höherer Volumenstrom (Qₚᵤₘₚ) gefördert wird, je höher der an der Rückmeldeleitung (46) anliegende Lastmeldedruck (p_{feedbk}) ist.

2. Hydraulikversorgung nach Anspruch 1, **dadurch gekennzeichnet, dass** die Kontrolleinheit (22) das elektrische Stellmittel (18) hinsichtlich einer Modifikation eines zwischen gefördertem Volumenstrom (Qₚᵤₘₚ) und antriebsseitiger Pumpendrehzahl (nₚᵤₘₚ) bestehenden funktionalen Zusammenhangs (50) ansteuert.

3. Hydraulikversorgung nach Anspruch 2, **dadurch gekennzeichnet, dass** die Modifikation seitens der Kontrolleinheit (22) derart erfolgt, dass der von der Verstellpumpe (16) geförderte Volumenstrom (Qₚᵤₘₚ) mit Erreichen eines vorgegebenen Höchstwerts (nₘₐₓ) der Pumpendrehzahl (nₚᵤₘₚ) einen konstanten Wert (Qₘₐₓ) einnimmt.

4. Hydraulikversorgung nach Anspruch 2, **dadurch gekennzeichnet, dass** die Modifikation seitens der Kontrolleinheit (22) derart erfolgt, dass der von der Verstellpumpe (16) geförderte Volumenstrom (Qₚᵤₘₚ) im Sinne der Einhaltung einer vorgegebenen Leistungscharakteristik eines zum Betrieb der Verstellpumpe (16) vorgesehenen Dieselmotors (36) dahingehend angepasst wird, dass dieser in einem Leerlaufdrehzahlbereich bzw. einem Bereich mit vergleichsweise niedriger Drehzahl des Dieselmotors (36) soweit abgesenkt wird, dass ein mögliches Abwürgen des Dieselmotors (36) aufgrund einer übermäßigen Belastung von Seiten der Verstellpumpe (16) unterbunden wird.

## Claims

1. Load-controlled hydraulic supply for a utility vehicle, in particular an agricultural tractor, comprising a variable-displacement pump (16) fed with hydraulic fluid from a hydraulic reservoir (14), wherein the variable-displacement pump (16) has a mechanically actuatable control slide (20) for changing a volume flow (Qₚᵤₘₚ) delivered and an electrical actuating means (18) for actuating the control slide (20), wherein a control unit (22) controls the electrical actuating means (18) in accordance with a determined load requirement on the consumer side, **characterized in that** the load requirement on the consumer side is determined by means of a pressure sensor (44), which is used to detect a load signalling pressure (p_{feedbk}), which is applied to a feedback line (46), of a hydraulic consumer (32), wherein the sensor signal generated by the pressure sensor (44) is converted by the control unit (22) into a control signal suitable for actuating the electrical actuating means (18) in such a manner that the higher the load signalling pressure (p_{feedbk}) applied to the feedback line (46), the higher the volume flow (Qₚᵤₘₚ) delivered by the variable-displacement pump (16).

2. Hydraulic supply according to Claim 1, **characterized in that** the control unit (22) controls the electrical actuating means (18) in respect of a modification of a functional relationship (50) existing between the volume flow (Qₚᵤₘₚ) delivered and the drive-side pump speed (nₚᵤₘₚ).

3. Hydraulic supply according to Claim 2, **characterized in that** the modification on the part of the control unit (22) is carried out in such a manner that the volume flow (Qₚᵤₘₚ) delivered by the variable-displacement pump (16) assumes a constant value (Qₘₐₓ) when a predetermined maximum value (nₘₐₓ) of the pump speed (nₚᵤₘₚ) is reached.

4. Hydraulic supply according to Claim 2, **characterized in that** the modification on the part of the control unit (22) is carried out in such a manner that the volume flow (Qₚᵤₘₚ) delivered by the variable-displacement pump (16) is adapted so as to maintain a predetermined power characteristic of a diesel engine (36) provided for operating the variable-displacement pump (16) such that the volume flow is reduced in an idling speed range or a range with a comparatively low speed of the diesel engine (36) to such an extent that possible stalling of the diesel engine (36) owing to excessive loading on the part of the variable-displacement pump (16) is prevented.

## Revendications

1. Alimentation hydraulique à commande de charge pour un véhicule utilitaire, en particulier un tracteur agricole, comprenant une pompe à cylindrée variable (16) alimentée en fluide hydraulique à partir d'un réservoir hydraulique (14), la pompe à cylindrée variable (16) présentant un tiroir de distribution (20) actionnable mécaniquement pour la modification d'un flux volumique transporté (Qₚᵤₘₚ) ainsi qu'un moyen de réglage (18) électrique pour l'actionnement du tiroir de distribution (20), une unité de commande (22) commandant le moyen de réglage (18) électrique en fonction d'un besoin de charge côté consommateur déterminé, **caractérisée en ce que** la détermination du besoin de charge côté consommateur est effectuée au moyen d'un capteur de pression (44), qui sert à la détection d'une pression de détection de charge (p_{feedbk}) appliquée à une ligne de rétrosignal (46) d'un consommateur hydraulique (32), le signal de capteur généré par le capteur de pression (44) étant transformé par l'unité de commande (22) en un signal de commande approprié pour l'actionnement du moyen de réglage (18) électrique de telle sorte que la pompe à cylindrée variable (16) transporte un flux volumique (Qₚᵤₘₚ) d'autant plus élevé que la pression de détection de charge (p_{feedbk}) appliquée à la ligne de rétrosignal (46) est élevée.

2. Alimentation hydraulique selon la revendication 1, **caractérisée en ce que** l'unité de commande (22) commande le moyen de réglage (18) électrique quant à une modification d'une relation fonctionnelle (50) qui existe entre un flux volumique transporté (Qₚᵤₘₚ) et une vitesse de rotation de la pompe (nₚᵤₘₚ) côté entraînement.

3. Alimentation hydraulique selon la revendication 2, **caractérisée en ce que** la modification par l'unité de commande (22) est effectuée de telle sorte que le flux volumique (Qₚᵤₘₚ) transporté par la pompe à cylindrée variable (16) prend une valeur constante (Qₘₐₓ) lorsque la vitesse de rotation de la pompe (nₚᵤₘₚ) atteint une valeur maximale (nₘₐₓ) spécifiée.

4. Alimentation hydraulique selon la revendication 2, **caractérisée en ce que** la modification par l'unité de commande (22) est effectuée de telle sorte que le flux volumique transporté (Qₚᵤₘₚ) par la pompe à débit variable (16) est adapté dans le sens du maintien d'une caractéristique de performance spécifiée d'un moteur diesel (36) prévu pour le fonctionnement de la pompe à débit variable (16) de sorte que celui-ci est abaissé dans une plage de vitesse de ralenti ou dans une plage présentant une vitesse de rotation relativement basse du moteur diesel (36) jusqu'à ce qu'un calage éventuel du moteur diesel (36) en raison d'une sollicitation excessive par la pompe à débit variable (16) soit supprimé.
